Europäisches Patentamt

European Patent Office

Office européen des brevets

(11) Veröffentlichungsnummer : **0 029 260**
**B1**

(12) **EUROPÄISCHE PATENTSCHRIFT**

(45) Veröffentlichungstag der Patentschrift :
07.12.83

(51) Int. Cl.³ : **B 60 R 25/02**

(21) Anmeldenummer : **80200959.7**

(22) Anmeldetag : **13.10.80**

(54) **Vorrichtung zur Herstellung einer festen, jedoch lösbaren Verbindung zwischen einem Lenkrad und einem Schliessriegel.**

(30) Priorität : **14.11.79 DE 2945937**

(43) Veröffentlichungstag der Anmeldung :
**27.05.81 Patentblatt 81/21**

(45) Bekanntmachung des Hinweises auf die Patenterteilung : **07.12.83 Patentblatt 83/49**

(84) Benannte Vertragsstaaten :
**DE FR GB IT**

(56) Entgegenhaltungen :
**DE-A- 2 632 908
DE-A- 2 637 850
DE-A- 2 651 496
DE-A- 2 711 701
GB-A- 2 018 886
US-A- 1 511 351**

(73) Patentinhaber : **KARL SCHMIDT GMBH
Christian-Schmidt-Strasse 8/12 Postfach 1351
D-7107 Neckarsulm (DE)**

(72) Erfinder : **Bauer, Wolfgang, Ing. grad.
Welzheimer Strasse 5
D-8757 Karlstein 1 (DE)**
Erfinder : **Grosser, Werner
Hauptstrasse 26
D-8751 Sulzbach (DE)**

(74) Vertreter : **Fischer, Ernst, Dr.
Reuterweg 14
D-6000 Frankfurt am Main 1 (DE)**

# Vorrichtung zur Herstellung einer festen, jedoch lösbaren Verbindung zwischen einem Lenkrad und einem Schließriegel

Die Erfindung betrifft eine Vorrichtung zur Herstellung einer festen, jedoch lösbaren Verbindung zwischen einem mit der Lenksäule verbundenen Lenkrad und einem durch einen Schließzylinder bewegbaren Schließriegel.

Bekannt sind Vorrichtungen, bei denen in Schließstellung ein über einen Schließzylinder bewegbarer Schließriegel in in der Lenksäule befindliche Ausnehmungen eingreift. Da solche Ausnehmungen nur in begrenzter Anzahl in der Lenksäule angebracht werden können, ist es erforderlich, das Lenkrad um einen bestimmten Betrag zu verdrehen, bis der Schließriegel in eine der Ausnehmungen einrastet. Dies hat zur Folge, daß eine hohe Kraft auf den Schließriegel wirkt und der Fahrzeugführer ein hohes Drehmoment aufbringen muß, um die Schließvorrichtung zu entriegeln. Im übrigen kann die Schließverbindung durch gewaltsames Drehen des Lenkrades gelöst werden.

Man hat auch Schließvorrichtungen vorgesehen, bei denen von der Lenksäule eine mit Ausnehmungen versehene Scheibe angebracht ist, in die der Schließriegel einrastet. Bei dieser Schließverbindung kann durch Axialbewegungen der Lenksäule der Sperrbolzen aus den Ausnehmungen herausgedrückt und damit die Schließverbindung aufgehoben werden.

Zur Beseitigung der vom vorgenannten Stand der Technik anhaftenden Nachteile ist in der DE-A-27 39 393 eine Schließvorrichtung vorgeschlagen, die aus einer auf der Unterseite der Lenkradnabe befestigten Sicherungshaube besteht, die einen konzentrisch zur Lenksäule verlaufenden Zylinderteil mit darin angebrachten Durchbrechungen aufweist, in welche die Sperrnase eines Riegels der Schließvorrichtung eingreift. Dabei ist es von Nachteil, daß die Schließnase aus den Durchbrechungen mittels einfacher Hilfsmittel herausgedrückt und damit die Verbindung gewaltsam gelöst werden kann.

Aufgabe der vorliegenden Erfindung ist es, eine Schließverbindung zwischen Lenkradnabe und einem Riegel zu entwickeln, die einem gewaltsamen Lösen von außen her nicht zugänglich ist.

Die Lösung dieser Aufgabe besteht in einer lenksäulenseitig topfartig ausgebildeten, aus Druckguß bestehenden Lenkradnabe, deren konzentrisch zur Lenksäule verlaufender zylinderförmiger Flansch auf dem Umfang der Innenseite mit axial verlaufenden Nuten versehen ist, vor die auf der der Lenkradnabe abgewandten Seite ein fest mit den zwischen den Nuten bestehenden Stegen verbundener Metallring angebracht ist.

Der Metallring kann verschraubt, vernietet oder mit Kerbnägeln befestigt sein.

Der vorzugsweise aus Stahl bestehende Ring kann in eine in den Stirnseiten der Stege umlaufende Nute eingepreßt sein.

Ein zweckmäßiges Ausführungsbeispiel ist in der Zeichnung dargestellt. Es zeigen

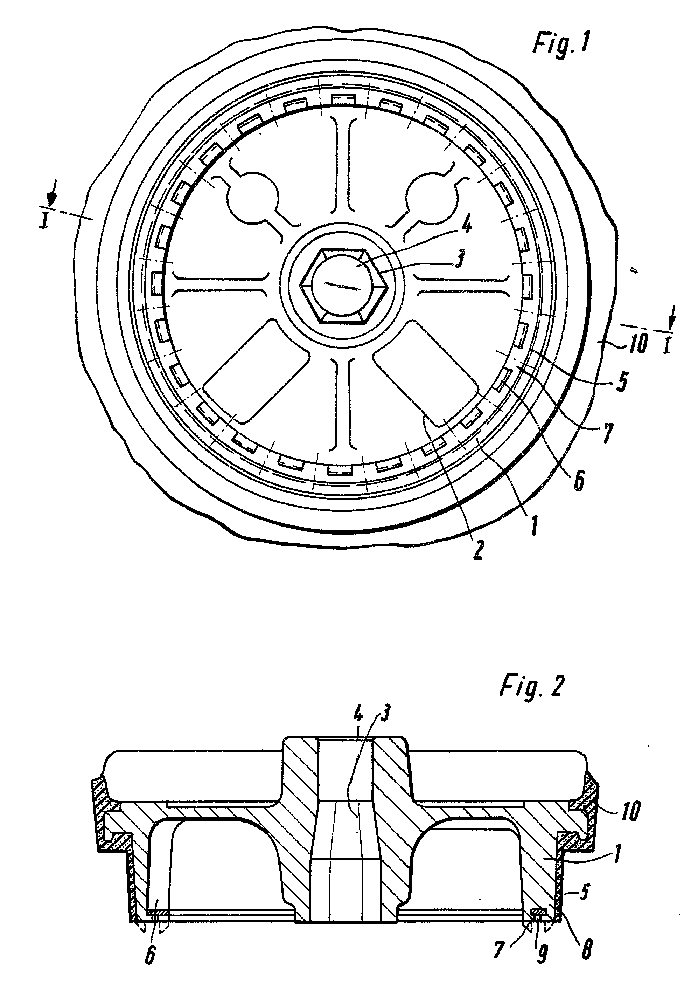

Figur 1 eine Draufsicht auf die Unterseite der Lenkradnabe.

Figur 2 einen Längsschnitt entlang der Schnittlinie I-I der Fig. 1.

In die im Druckgußverfahren hergestellte Lenkradnabe 1 sind die Lenkradspeichen 2 eingegossen. In der Mitte der Lenkradnabe befindet sich die mit einer Kerbverzahnung 3 versehene Öffnung 4, mit der die Nabe auf die Lenksäule aufsetzbar ist. Auf der Innenseite des mit der Nabenunterseite einstückig verbundenen Flansches 5 sind in regelmäßigen Abständen axial verlaufende Nuten 6 angeordnet, die stirnseitig durch einen Stahlring 7 verschlossen sind, der in einen in den Stirnseiten der zwischen den Nuten 6 bestehenden Steg 8 befindliche Nute 9 eingepreßt ist. Die Nabe ist auf ihrem Umfang mit einer PU-Schaumschicht 10 ummantelt.

Der mit der Erfindung erzielte Vorteil ist darin zu sehen, daß die erfindungsgemäße Schließverbindung nicht von außen zu öffnen und das Lenkrad von der Lenksäule im abgeschlossenen Zustand nicht abziehbar ist.

## Ansprüche

1. Vorrichtung zur Herstellung einer festen, jedoch lösbaren Verbindung zwischen einem mit der Lenksäule verbundenen Lenkrad und einem durch einen Schließzylinder bewegbaren Schließriegel, gekennzeichnet durch eine lenksäulenseitig topfförmig ausgebildete, aus Druckguß bestehende Lenkradnabe (1), deren konzentrisch zur Lenksäule verlaufender zylinderförmiger Flansch (5) auf dem Umfang der Innenseite mit einer Vielzahl axial verlaufender Nuten (6) für das Einrasten des Schließriegels versehen ist, wobei vor die Stirnseiten der Nuten ein fest mit den zwischen den Nuten liegenden Stegen (8) verbundener Metallring (7) angeordnet ist.

2. Vorrichtung nach Anspruch 1, dadurch gekennzeichnet, daß der Metallring (7) verschraubt, vernietet oder mit Kerbnägeln befestigt ist.

3. Vorrichtung nach Anspruch 1, dadurch gekennzeichnet, daß der in eine in die Stirnseite der Stege (8) umlaufende Nute (9) eingesetzte Metallring (7) durch die dagegengedrückte, verformte Außen- und/oder Innenkante der Nute befestigt ist.

## Claims

1. A device for making a firm, but releasable joint between a steering wheel, which is connected to the steering column, and a locking bolt, which is movable by a lock cylinder, characterized in that the steering wheel hub (1) is diecasted and pot-shaped on the side facing of the steering column and has a cylindrical flange (5) that is concentric to the steering column and is provided on its inside peripheral surface with a multiplicity of axial grooves (6) for receiving the locking bolt, and in that a metal ring (7) is disposed in front of the ends of the grooves and firmly connected to the lands (8) disposed between the grooves.

2. A device according to claim 1, characterized in that the metal ring (7) is screw-connected, riveted or secured by notched nails.

3. A device according to claim 1, characterized in that the metal ring (7) inserted in a peripheral groove (9) in the end faces of the lands (8) is secured in that the outside and/or inside edge of the groove has been forced against the ring and deformed.

**Revendications**

1. Dispositif pour réaliser une liaison solide, mais séparable entre un volant de direction relié à la colonne de direction et un pêne de verrouillage susceptible d'être déplacé par un cylindre de fermeture, caractérisé par un moyeu de volant de direction (1) en matière coulée sous pression, ayant la forme d'un pot du côté de la colonne de direction et dont le flasque (5) de forme cylindrique, s'étendant concentriquement à la colonne de direction est muni sur le pourtour de la partie intérieure d'un grand nombre de gorges s'étendant axialement pour le verrouillage du pêne de verrouillage, une bague (7) métallique reliée rigidement aux nervures (8) se trouvant entre les gorges étant disposée devant les parties frontales des gorges.

2. Dispositif suivant la revendication 1, caractérisé en ce que la bague (7) métallique est fixée au moyen de vis, de rivets ou de clous cannelés.

3. Dispositif suivant la revendication 1, caractérisé en ce que la bague (7) métallique, introduite dans une gorge (9) de pourtour ménagée dans la partie frontale des nervures (8), est fixée par le fait qu'elle y est poussée par le bord extérieur et/ou intérieur déformé de la gorge.

Fig. 1

Fig. 2